(19) Europäisches Patentamt / European Patent Office / Office européen des brevets

(11) **EP 2 853 737 B1**

(12) **EUROPEAN PATENT SPECIFICATION**

(45) Date of publication and mention
of the grant of the patent:
**17.07.2019  Bulletin 2019/29**

(21) Application number: **13794208.2**

(22) Date of filing: **07.05.2013**

(51) Int Cl.:
*F03H 1/00* (2006.01)          *B64G 1/40* (2006.01)

(86) International application number:
**PCT/CN2013/075242**

(87) International publication number:
**WO 2013/174208 (28.11.2013 Gazette 2013/48)**

(54) **FUEL-FREE SPACECRAFT PROPELLING SYSTEM BASED ON SPATIAL ATOMIC OXYGEN**

KRAFTSTOFFFREIES RAUMFAHRZEUGANTRIEBSSYSTEM AUF GRUNDLAGE VON IM WELTRAUM VORHANDENEN ATOMAREM SAUERSTOFF

SYSTÈME DE PROPULSION DE VAISSEAU SPATIAL SANS CARBURANT BASÉ SUR L'OXYGÈNE ATOMIQUE SPATIAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.05.2012  CN 201210159715**
**01.08.2012  CN 201210270034**

(43) Date of publication of application:
**01.04.2015  Bulletin 2015/14**

(73) Proprietor: **Beijing Institute of Spacecraft Environment Engineering**
**Beijing 100094 (CN)**

(72) Inventors:
• **YI, Zhong**
  **Beijing 100094 (CN)**
• **ZHANG, Chao**
  **Beijing 100094 (CN)**
• **MENG, Lifei**
  **Beijing 100094 (CN)**
• **JIANG, Haifu**
  **Beijing 100094 (CN)**
• **LIU, Yenan**
  **Beijing 100094 (CN)**
• **XIAO, Qi**
  **Beijing 100094 (CN)**
• **JIANG, Lixiang**
  **Beijing 100094 (CN)**
• **YU, Zhaoji**
  **Beijing 100094 (CN)**

(74) Representative: **Deans, Michael John Percy**
**M.J.P. Deans**
**Lane End House**
**Hookley Lane**
**Elstead, Surrey GU8 6JE (GB)**

(56) References cited:
**CN-A- 1 736 131          CN-A- 101 855 948**
**CN-A- 102 434 414        CN-A- 102 767 497**
**CN-A- 102 797 656        CN-A- 102 797 656**
**DE-U1- 29 501 616        US-A1- 2008 093 506**
**US-B1- 6 334 302         US-B1- 6 449 941**
**US-B2- 7 581 380**

• **G Cifali ET AL: "Experimental characterization of HET and RIT with atmospheric propellants", 32nd International Electric Propulsion Conference, Wiesbaden - Germany September 11 - 15, 2011; IEPC-2011-224, 8 November 2007 (2007-11-08), pages 1-12, XP055479269, Retrieved from the Internet: URL:http://erps.spacegrant.org/uploads/images/images/iepc_articledownload_1988-2007/2011index/IEPC-2011-224.pdf [retrieved on 2018-05-29]**

**Description**

The invention relates to the field of the spacecraft propulsion and the use of the space environment, and more particularly relates to a non-fuel rail spacecraft propulsion system based on the space atomic oxygen and a method to propel the rail spacecraft continuous movement based on the system.

The propulsion technique can be divided into the chemical propulsion and electric propulsion, as well as some other propulsion technique (such as solar sail, tethered propulsion and the like). At present, most main thrusters of spacecraft employ the chemical propulsion. But as an advanced propulsion technique, the electric propulsion is getting more and more attention.

The chemical propulsion is a propulsion technique using the chemical energy to send the spacecraft into the reserved space rail and realizes the orbit maneuver. The most prominent feature of the chemical propulsion is high propulsion, which is the most used technique in the space field. The chemical engine is used in the present long-life tri-axial attitude control stabilized satellite and spin satellite as a controlling and executing assembly. There are two work modes of the chemical engine: pulsating work and stability work. The pulsating work is most used in the satellite attitude-adjusting and position-retaining; the stability work is most used in the satellite-orbit maneuver.

Electric propulsion provides energy to the propellant using the electricity generated and produced by the solar panel and nuclear reactor, to make the propellant producing the jet velocity far more than the common chemical thruster. High specific impulse of electric propulsion can reduce the system quality, save the propellant, improve the life and increase the payload. Besides applying in the long-life communication satellite to improve the performance of the satellite platform, the electric propulsion can complete the tasks which the common propulsion system is unable to do.

Both the chemical propulsion and electric propulsion need to carry certain propellant, which not only occupies the weight of the spacecraft platform but also greatly increases the launch costs. Meanwhile the orbit-maneuver life of the spacecraft depends on the carried fuel quantity. The propulsion mode depends on the carried fuel and seriously restricts the spacecraft platform function extension and service life prolongation. So, the present international space field is actively developing all kinds of propulsion techniques based on the use of space environment. All the new techniques, including the solar sail, magnetic sail, magnetic engine or the like, are developed based on the use of the space environment of light, electric, magnetic and the like.

US2008093506 (A1) discloses a thruster which has a main chamber defined within a tube. The tube has a longitudinal axis which defines an axis of thrust; an injector, which may be a compression chamber, injects ionizable gas within the tube, at one end of the main chamber. An ionizer is adapted to ionize the injected gas within the main chamber. A first magnetic field generator and an electromagnetic field generator are adapted to generate a magnetized ponderomotive accelerating field downstream of said ionizer along the direction of thrust on said axis. The thruster ionizes the gas, and subsequently accelerates both electrons and ions by the magnetized ponderomotive force.

US6334302 (B1) discloses an engine including a controllable output plasma generator that produces a plasma from ionisable fuel stored on board, a controllable heater for selectably raising a temperature of the plasma connected to an outlet of the plasma generator, and a nozzle connected to an outlet of the heater, through which heated plasma is discharged to provide thrust. The source of plasma may be a helicon generator. The heater may be an ion cyclotron resonator. The nozzle may be a radially diverging magnetic field disposed on a discharge side of the heater so that helically travelling particles in the heater exit the heater at high axial velocity. A particular embodiment includes control circuits for selectably directing a portion of radio frequency power from an RF generator to the helicon generator and to the cyclotron resonator so that the thrust output and the specific impulse of the engine can be selectively controlled. The ionisable fuel is preferably stored in liquid form, and this liquid fuel is used to cool the magnets.

The present invention is concerned with a fuel-free system, as in US2008093506, and so avoids the problem inherent in US6334302, and unavoidable if stored liquid fuel is used to cool the magnets, that a propulsion method that requires carrying fuel has a high launch cost. The spacecraft orbit life depends on the amount of the carried fuel resulting in restriction of the spacecraft orbit life. The present invention uses space atomic oxygen as the propellant, making the in-orbit maneuver of the spacecraft in the space environment a continuous space-rotating movement without the influence by the tiny resistance in the space environment.

To solve the aforementioned problem, the invention adopts the following technical protocols.

A fuel-free spacecraft propulsion system based on space atomic oxygen, comprising an outer cylinder with both ends open, an RF generating device and an ion cyclotron wave heating device; characterised in that the fuel-free spacecraft propulsion system further comprises an atomic oxygen collecting device inside the outer cylinder; wherein the atomic oxygen collecting device is arranged at the front end of the outer cylinder for propelling forwardly; wherein said atomic oxygen collecting device is hermetically connected with the RF generating device and with the ion cyclotron wave heating device through a first magnetic confinement device arranged at both ends of the RF generating device (4); wherein the ion cyclotron wave heating device is provided with an inlet and an outlet for a spiral wave discharge oxygen plasma, the inlet and the outlet of the ion cyclotron wave heating device being provided with a second magnetic confinement device; the atomic oxygen collecting device being adapted to pressurize space atomic oxygen entering at the front end of the outer cylinder while the spacecraft is moving forward, the pressurized space atomic oxygen being ionized in a spiral wave discharge mode in the RF generation device, the
oxygen ions of the ionized oxygen plasma in the ion cyclotron wave heating device absorbing the energy of the cyclotron wave resulting in the kinetic energy increase, and the second magnetic confinement device (8) being adjustable to change the magnetic field configuration, whereby circumferential motion of the oxygen ions is transformed into parallel motion, and a propulsion force is provided for the spacecraft as a result of oxygen ions being ejected from the ion cyclotron wave heating device.

Further, the aforementioned atomic oxygen collecting device has gradually diminished sectional area, preferably trumpet-type atomic oxygen collecting device.

Further, the spiral wave discharge mode of the RF generating device is produced by the RF discharging, and the ion cyclotron wave of the ion cyclotron wave heating device produced by the RF device.

Further, the aforementioned adjusting of the magnetic field is changing the magnetic field into the divergent magnetic field.

In an application of the aforementioned propulsion system, the propulsion system is arranged at both sides of the spacecraft. The atomic oxygen in the rail space environment is used as the propellant, ionized in spiral wave mode, heated by ion cyclotron, then sprayed after accelerated to propel the in-orbit maneuver of the spacecraft.

In comparison with the traditional electric propulsion technique, the propulsion of the invention does not need to carry the propellant, which greatly reduces the launch costs, enables a spacecraft to work on an orbit in the whole life circle work and is advantageous.

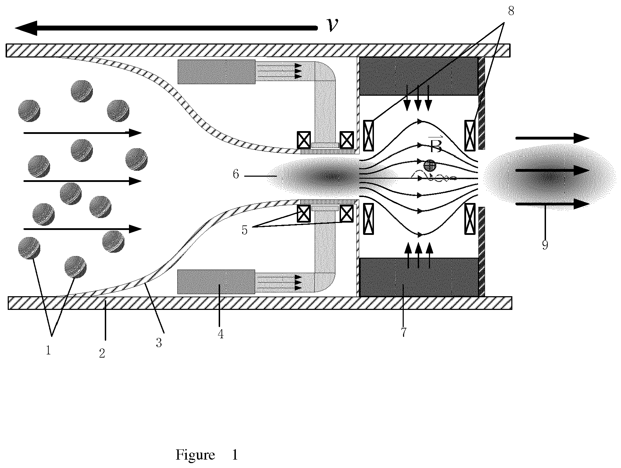

Fig. 1 illustrates a schematic view of the fuel-free spacecraft propulsion system based on the space atomic oxygen.

In Fig.1, the following numbers indicate the respective components: 1- space atomic oxygen; 2- an outer cylinder of the propulsion device; 3- an atomic oxygen collecting device; 4- an RF generating device; 5- a magnetic confinement device; 6- a spiral wave discharge oxygen plasma; 7- an ion cyclotron wave heating device; 8- a magnetic confinement device; 9- an ion spraying flame.

Embodiments of the fuel-free spacecraft propulsion system based on the space atomic oxygen of the invention now will be described more fully with reference to the accompanying drawings. These embodiments are provided for example, the invention should not be construed as limited to the embodiments.

In Fig.1, a fuel-free spacecraft propulsion system based on the space atomic oxygen of the invention, comprises an outer cylinder 2 of the propulsion device with both ends open, an atomic oxygen collecting device 3 inside the outer cylinder 2 of the propulsion device, an RF generating device 4 and the ion cyclotron wave heating device 7. The atomic oxygen collecting device 3 is arranged at the front end of the outer cylinder 2 of propulsion device when propelling forwardly following the rail spacecraft. The space atomic oxygen 1 enters the atomic oxygen collecting device 3 with the rail spacecraft being propelled forward. The atomic oxygen collecting device 3 is hermetically connected with one end of the RF generating device 4 through a magnetic confinement device5 arranged at both ends of the RF generating device 4. The other end of the RF generating device 4 is hermetically connected with the ion cyclotron wave heating device 7 through the magnetic confinement device arranged at the end. From the entering end of the space atomic oxygen 1 to the entering end through which the space atomic oxygen entering the RF generating device 4, the atomic oxygen collecting device 3 has a gradually diminished sectional area, such as trumpet-type atomic oxygen collecting device. The atomic oxygen collecting device 3 is used for pressurizing the space atomic oxygen entering the front end of the outer cylinder of the propulsion device while the spacecraft is moving forward. The pressurized space atomic oxygen is ionized in a spiral wave discharge mode in the RF generation device 4. A spiral wave discharge oxygen plasma 6 from the RF generating device 4 enters the ion cyclotron wave heating device 7. The inlet and outlet of the spiral wave discharge oxygen plasma in the heating device are respectively provided with another magnetic confinement device 8. The oxygen ions of the ionized oxygen plasma in the ion cyclotron wave heating device absorbs the energy of the cyclotron wave resulting in the kinetic energy increase. The magnetic field configuration of a sprayer is changed by adjusting the magnetic confinement device inside the ion cyclotron wave heating device. The magnetic field configuration means the shape and distribution of the magnetic flux. Circumferential motion of the oxygen ions is transformed into parallel motion, and propulsion force is provided for the spacecraft after the oxygen ions are sprayed out of the sprayer. The spraying plasma is the ion spraying flame. Adjusting of the magnetic field is changing the magnetic field to the divergent magnetic field. The divergent magnetic field is that the magnetic line extends radially from the interior of the ion cyclotron wave heating device to the oxygen ions sprayer.

A fuel-free spacecraft propulsion system based on the space atomic oxygen of the invention specially applies to propel the in-orbit maneuver of the spacecraft in the space environment. When using the propulsion system, the propulsion system is arranged at both sides of the spacecraft. The atomic oxygen in the rail space environment is used as the propellant, ionized in a spiral wave mode, heated by an ion cyclotron, then sprayed after acceleration to propel the in-orbit maneuver of the spacecraft.

To simply explain the process of the fuel-free spacecraft propulsion system, the system is a cylindrical space particles collecting device, arranged at the special position of the spacecraft, to collect the atomic oxygen of the rail space environment as the spacecraft is moving. The 300km rail space environment exists about the atomic oxygen density of $10^{15}/m^3$, of which average thermal motion speed can be ignored compared with speed of the spacecraft, so the atomic oxygen in the rail can be regarded as static. The relative speed of the two is the speed of the spacecraft, about 8 km/s (the first cosmic speed).

Atomic oxygen is discharged as ion oxygen, if its kinetic energy is increased to IKeV by the RF heating mode, from Ft=Δ(mv), $v = \sqrt{\frac{2E}{m}}$ , we can see that:

$$Ft=\sqrt{2mE}$$

An $O^+$ can gain the impulse of about $0.3 \times 10^{-20}$(N·S).

Supposing that the spacecraft carries an AO collecting device with $1m^2$ sectional area, the collecting atomic oxygen amount per unit time is:

$$N = nV = nSvt$$

Wherein the n is the rail atomic oxygen density($10^{15}/m^3$), the S is the collecting sectional area ($1m^2$), and the v is the spacecraft motion speed (about 8km/s), the collecting atomic oxygen amount per unit time is $8 \times 10^{18}$.

From Ft=Δ (M$\overline{V}$) =Δ (nmv), we can see that, when the particles are accelerating, energy is constant. The propulsion force is gained when using the space atomic oxygen when it is proportional to its ionization rate. Currently an American organization adopts the spiral wave discharge mode, under certain conditions, can gain the 100% discharged plasma. As a reference, all the collected atomic oxygen is ionized, the oxygen ions are accelerated to IKeV, the entire gained impulse Ft is $2.4 \times 10^{-2}$(N·S), and the gained propulsion force is 24mN.

The fuel-free spacecraft propulsion is based on the space atomic oxygen. The gained propulsion force is proportional to the collecting atomic oxygen flux density per unit time, the ionization rate and the ion heating energy. If the radius of the collecting device is 1m, the atomic oxygen is 100% ionized per unit time, and the oxygen ions are heated to 1KeV, the gained propulsion force is 70mN. Even when the ionization rate is 50%, the gained propulsion force is 35mN.

**Claims**

1. A fuel-free spacecraft propulsion system based on space atomic oxygen, comprising an outer cylinder (2) with both ends open; an RF generating device (4); and an ion cyclotron wave heating device (7); wherein the fuel-free spacecraft propulsion system further comprises an atomic oxygen collecting device (3) inside the outer cylinder; wherein the atomic oxygen collecting device (3) is arranged at the front end of the outer cylinder (2) for propelling forwardly; wherein said atomic oxygen collecting device (3) is hermetically connected with the RF generating device (4) and with the ion cyclotron wave heating device (7) through a first magnetic confinement device (5) arranged at both ends of the RF generating device (4); wherein the ion cyclotron wave heating device is provided with an inlet and an outlet for a spiral wave discharge oxygen plasma, the inlet and the outlet of the ion cyclotron wave heating device being provided with a second magnetic confinement device (8); the atomic oxygen collecting device (3) being adapted to pressurize space atomic oxygen (1) entering the front end of the outer cylinder (2) while the spacecraft is moving forward, the pressurized space atomic oxygen being ionized in a spiral wave discharge mode in the RF generation device (4), the oxygen ions of the ionized oxygen plasma in the ion cyclotron wave heating device (7) absorbing the energy of the cyclotron wave resulting in a kinetic energy increase, and the second magnetic confinement device (8) being adjustable to change the magnetic field configuration, whereby circumferential motion of the oxygen ions is transformed into parallel motion, and a propulsion force is provided for the spacecraft as a result of oxygen ions being ejected from the ion cyclotron wave heating device (7).

2. A fuel-free spacecraft propulsion system according to Claim 1, further **characterized in that** the atomic oxygen collecting device (3) has a gradually diminishing sectional area with distance from the open end of the outer cylinder.

3. A fuel-free spacecraft propulsion system according to Claim 2, further **characterized in that** the atomic oxygen collecting device (3) is trumpet-shaped.

4. A fuel-free spacecraft propulsion system according to Claim 1, further **characterized in that** an RF discharge produces the spiral wave discharge mode of the RF generating device (4), and the RF generating device is adapted to produce the ion cyclotron wave of the ion cyclotron wave heating device (7).

5. A fuel-free spacecraft propulsion system according to Claim 1, further **characterized in that** the adjustment of the magnetic field of the second magnetic confinement device (8) changes the magnetic field into a divergent magnetic field.

6. A spacecraft provided with a fuel-free spacecraft propulsion system according to any preceding Claim on both sides of a spacecraft for in-orbit maneuver of the spacecraft.

## Patentansprüche

1. Kraftstofffreies Raumfahrzeug-Antriebssystem basierend auf atomarem Sauerstoff im Weltraum, umfassend einen ±uóeren Zylinder (2) mit offenen Enden, eine RF-E rzeugungsvorrichtung (4) und eine Ionenzyklotronwellenheizvorrichtung (7), wobei das kraftstofffreie Raumfahrzeug-Antriebssystem ferner eine atomare Sauerstoffsammelvorrichtung (3) innerhalb des ±uóeren Zylinders umfasst; wobei die atomare Sauerstoffsammelvorrichtung (3) am vorderen Ende des ±uóeren Zylinders (2) zum Vorw±rtsbewegen angeordnet ist; wobei die atomare Sauerstoffsammelvorrichtung (3) hermetisch mit der RF-E rzeugungsvorrichtung (4) und mit der Ionenzyklotronwellenheizvorrichtung (7) durch eine erste magnetische Sperrvorrichtung (5) verbunden ist, die an beiden Enden der RF-E rzeugungsvorrichtung (4) angeordnet ist, wobei die Ionenzyklotronwellenheizvorrichtung mit einem Einlass und einem Auslass fær ein Spiralwellenentladungssauerstoffplasma versehen ist, wobei der Einlass und der Auslass der Ionenzyklotronwellenheizvorrichtung mit einer zweiten magnetischen Sperrvorrichtung (8) versehen ist; wobei die atomare Sauerstoffsammelvorrichtung (3) angepasst ist, um atomaren Sauerstoff (I) im Weltraum, der in das vordere Ende des ±uóeren Zylinders (2) eintritt, unter Druck zu setzen, w±hrend sich das Raumfahrzeug vorw±rts bewegt, wobei der unter Druck gesetzte atomare Sauerstoff in einem S piralwellenentladungsmodus in der RF-Erzeugungsvorrichtung (4) ionisiert wird, wobei die Sauerstoff-Ionen des ionisierten Sauerstoffplasmas in der Ionenzyklotronwellenheizvorrichtung (7) die Energie der Zyklotronwelle absorbieren, was zu einer kinetischen Energiezunahme fæhrt, und die zweite magnetische Sperrvorrichtung (8) einstellbar ist, um die Magnetfeldkonfiguration zu ±ndern, wodurch die Umfangsbewegung der Sauerstoff-Ionen in eine Parallelbewegung umgewandelt wird, und eine Antriebskraft fær das Raumfahrzeug bereitgestellt wird wegen der Sauerstoffionen, die aus der Ionenzyklotronwellenheizvorrichtung (7) ausgestoóen werden.

2. Kraftstofffreies Raumfahrzeugantriebssystem nach Anspruch 1, ferner **dadurch gekennzeichnet, dass** die atomare Sauerstoffsammelvorrichtung (3) eine mit Abstand vom offenen Ende des ±uóeren Zylinders schrittweise abnehmende Querschnittsfl±che aufweist.

3. Kraftstofffreies Raumfahrzeugantriebssystem nach Anspruch 2, ferner **dadurch gekennzeichnet, dass** die atomare Sauerstoffsammelvorrichtung (3) trompetenfØrmig ist.

4. Kraftstofffreies Raumfahrzeugantriebssystem nach Anspruch 1, ferner **dadurch gekennzeichnet, dass** eine RF-Entladung den Spiralwellenentladungsmodus der RF-Erzeugungsvorrichtung (4) verursacht, und die RF-Erzeugungsvorrichtung dazu ausgelegt ist, die Ionenzyklotronwelle der Ionenzyklotronwellenheizvorrichtung (7) zu erzeugen.

5. Kraftstofffreies Raumfahrzeugantriebssystem nach Anspruch 1, ferner **dadurch gekennzeichnet, dass** die Einstellung des Magnetfeldes der zweiten magnetischen Sperrvorrichtung (8) das Magnetfeld in ein divergentes Magnetfeld umwandelt.

6. Raumfahrzeug, das mit einem kraftstofffreien Raumfahrzeugantriebssystem gem±ó einem vorhergehenden Anspruch auf beiden Seiten eines Raumfahrzeugs fær ein In-Orbit-ManØver des Raumfahrzeugs ausgestattet ist.

## Revendications

1. Système de propulsion d'engin spatial sans carburant basé sur l'oxygène atomique spatial, comprenant un cylindre externe (2) avec deux les extrémités ouvertes ; un dispositif générateur de RF (4) ; et un dispositif de chauffage à ondes cyclotroniques ioniques (7) ; dans lequel le système de propulsion d'engin spatial sans carburant comprend un dispositif de collecte d'oxygène atomique (3) à l'intérieur du cylindre externe ; dans lequel le dispositif de collecte d'oxygène atomique (3) est agencé à l'extrémité avant du cylindre extérieur (2) pour propulsé vers l'avant ; dans lequel ledit dispositif de collecte d'oxygène atomique (3) est relié de manière hermétique avec le dispositif générateur de RF (4) et avec le dispositif de chauffage à ondes cyclotroniques ioniques (7) par le biais d'un premier dispositif de confinement magnétique (5) disposé aux deux extrémités du dispositif générateur de RF (4) ;dans lequel le dispositif de chauffage à ondes cyclotroniques à ions est pourvu d'une entrée et d'une sortie pour un plasma d'oxygène à décharge d'ondes spirales, l'entrée et la sortie du de chauffage à ondes cyclotroniques ioniques est pourvu d'un second dispositif de confinement magnétique (8) ; le dispositif de collecte d'oxygène atomique (3) étant apte à pressuriser l'oxygène atomique spatial (1) entrant dans l'extrémité avant du cylindre externe (2) lorsque l'engin spatial avance, l'oxygène atomique spatial pressurisé étant ionisé dans un mode de décharge à ondes spirales dans le dispositif générateur de RF (4), les ions oxygène du plasma d'oxygène ionisé dans le dispositif de chauffage à ondes cyclotroniques ioniques (7) absorbant l'énergie de l'onde cyclotron entraînant une augmentation d'énergie cinétique, et le second dispositif de confinement magnétique (8) étant réglable pour modifier la configuration du champ magnétique, selon lequel un mouvement circonférentiel des ions oxygène est transformé en mouvement parallèle, et une force de propulsion est fournie à l'engin spatial en conséquence de l'expulsion des ions oxygène du dispositif de chauffage à ondes cyclotroniques ioniques (7).

2.  Système de propulsion d'engin spatial sans carburant selon la revendication 1, **caractérisé en outre en ce que** le dispositif de collecte d'oxygène atomique (3) présente une diminution progressive de section avec la distance entre l'extrémité ouverte du cylindre extérieur.

3.  Système de propulsion d'engin spatial sans carburant selon la revendication 2, **caractérisé en outre en ce que** le dispositif de collecte d'oxygène atomique (3) est en forme de trompette.

4.  Système de propulsion d'engin spatial sans carburant selon la revendication 1, **caractérisé en outre en ce qu'**une décharge RF produit le mode de décharge à ondes spirales du dispositif générateur de RF (4), et le dispositif générateur de RF est apte à produire l'onde cyclotron ionique du dispositif de chauffage à ondes cyclotroniques ioniques.

5.  Système de propulsion d'engin spatial sans carburant selon la revendication 1, **caractérisé en outre en ce que** le réglage du champ magnétique du second dispositif de confinement magnétique (8) modifie le champ magnétique en un champ magnétique divergent.

6.  Engin spatial pourvu d'un système de propulsion d'engin spatial sans carburant selon l'une quelconque des revendications précédentes sur les des deux côtés d'un engin spatial pour une manoeuvre en orbite de l'engin spatial.

Figure 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008093506 A1
- US 6334302 B1

- US 2008093506 A
- US 6334302 B